# EUROPEAN PATENT SPECIFICATION

(11) **EP 0 318 794 B1**
(45) Date of publication and mention of the grant of the patent: **07.08.1996**
(21) Application number: 88119377.5
(22) Date of filing: 22.11.1988
(51) Int. Cl.: B29C 55/00, C08J 5/18

(54) **Stretched styrene-based resin moldings and a process for production thereof**
Gestreckte Formteile aus Styrolharz und Verfahren zum Herstellen derselben
Articles moulés étirés en resine de styrène et procédé pour leur fabrication

(30) Priority: 04.12.1987 JP 305837/87; 13.01.1988 JP 3847/88
(43) Date of publication of application: 07.06.1989
(73) Proprietor: IDEMITSU KOSAN COMPANY LIMITED, Tokyo 100 (JP)
(72) Inventor: Nakano, Akikazu, Ichihara-shi Chiba-ken (JP); Furusawa, Toshihiro, Kimitsu-gun Chiba-ken (JP); Ijitsu, Toshikazu, Kimitsu-gun Chiba-ken (JP)
(74) Representative: Türk, Gille, Hrabal, Leifert

(56) References cited:
- EP-A- 0 291 915
- EP-A- 0 342 234
- US-A- 4 680 353
- DATABASE WPIL, accession no. 89169217 [33], Derwent Publications Ltd, London, GB; & JP-A-1 110 122 (ASAHI CHEMICAL)

## Description

### BACKGROUND OF THE INVENTION

### 1. Field of the Invention

The present invention relates to stretched styrene-based resin moldings and a process for the production thereof each as defined below. More particularly, it is concerned with stretched styrene-based resin moldings which are excellent in heat resistance, solvent resistance, chemical resistance, electric insulating properties, mechanical strength, modulus of elasticity, and dimensional stability and have such transparency that the haze thereof is not more than 30 % which can be used in various applications; and a process for efficiently producing these stretched styrene-based resin moldings.

### 2. Description of the Related Art

The styrene polymers which have been hitherto used are those having atactic configuration as obtained by radical polymerization. However, improvement in physical properties by stretching such atactic styrene polymers cannot be expected.

Styrene polymers having isotactic configuration are also known, and an attempt to stretch them has been made ("Kobunshi Kagaku (Polymer Chemistry"), 21, 206 (1964)). However, a satisfactory stretching effect in such isotactic styrene polymers cannot be obtained because the rate of crystallization is slow and the main chain composed of carbon-carbon bonds in the styrene polymers has spiral structure.

In EP-A-0 342 234 (cited according to Article 54(3) and (4) EPC) shaped articles of a styrene-based polymer prepared by drawing a styrene-based polymer having a weight-average molecular weight of at least 100 000 and a mainly syndiotactic structure are disclosed. These known moldings being excellent in mechanical strength and heat resistance find various applications including ropes, cables and reinforced composite materials.

Surprisingly, the present inventors have found that stretched moldings having excellent physical properties and having such transparency that the haze thereof is not more than 30 % can be obtained if styrene-based resins of high syndiotacticity as developed by the present inventors JP-A-104 818/1987) are heat-melted, quenched prior to stretching at a quenching rate from 200 to 3°C/s and stretched.

### SUMMARY OF THE INVENTION

An object of the present invention is to provide stretched styrene-based resin moldings which are excellent in heat resistance, solvent resistance, chemical resistance, mechanical strength, modulus of elasticity, and dimensional stability and which have such transparency that the haze thereof is not more than 30 %.

Another object of the present invention is to provide stretched styrene-based resin moldings which are excellent in electric insulating properties.

Still another object of the present invention is to provide a process for efficiently producing these stretched styrene-based resin moldings.

For the designated states DE, GB, FR, IT, NL, SE, LI/CH and BE the present invention relates to a stretched styrene-based resin molding having such transparency that the haze thereof is not more than 30 % as obtained by subjecting a styrene-based resin having mainly syndiotactic configuration and a weight average molecular weight of at least 50,000,
excepted a styrene-based polymer having a weight-average molecular weight of 800,000, a syndiotacticity of 96% of the racemic pentad and compounded with each 0.1 % by weight of bis(2,4-di-tert-butylphenyl)pentaerithritol diphosphite and tetrakis[methylene(3,5-di-tert-butyl-4-hydroxy cinnamate)] methane,
by subjecting said styrene-based polymer to heat melting, quenching the molten resin prior to stretching, wherein the quenching rate is from 200 to 3°C/s, and subsequently to uniaxial stretching of at least two times or to biaxial stretching of at least 1.2 times in each direction.

For the designated states DE, GB, FR, IT, NL, SE, Li/CH and BE, the present invention also relates to a process for producing the above stretched styrene-based resin molding having such transparency that the haze thereof is not more than 30 % which comprises heat melting, quenching and stretching the above styrene-based resin as described above. More concretely, the process of the present invention comprises quenching the styrene-based resin molten by heat melting at a specific quenching rate and then stretching it to the above draw ratios.

For the designated states DE, GB, FR, IT, NL, SE, Li/CH and BE, the present invention further relates to a stretched styrene-based resin molding having such transparency that the haze thereof is not more than 30 % as obtained by annealing the above stretched styrene-based resin molding at a temperature in a range from a temperature higher than the glass transition temperature by 10°C to a temperature lower than the melting point by 5°C, preferably at a temperature of from 120 to 250°C.

For the designated states AT and ES the present invention relates to a stretched styrene-based resin molding as obtained by subjecting a styrene-based polymer having mainly syndiotactic configuration and a weight average molecular weight of at least 50,000 to uniaxial stretching of at least two times or to biaxial stretching of at least 1.2 times in each direction, preferably having heat resistance and such transparency that the haze is not more than 30%, and/or preferably, having such electric insulating properties that the breakdown voltage at 25 °C is at least 30 kV/mm.

Further the present invention relates for the designated countries AT and ES to a process for producing a stretched styrene-based resin molding which comprises subjecting a styrene-based resin having mainly syndiotactic configuration and a weight average molecular weight of at least 50,000 to uniaxial stretching or at least two times or biaxial stretching of at least 1.2 times in each direction, which preferably comprises heat melting and quenching the molten resin prior to stretching; preferably the quenching rate is from 200 to 3°C/s.

For the designated States AT and ES the invention further relates to a stretched styrene-based resin molding as obtained by subjecting the above stretched styrene-based resin molding to annealing at a temperature in a range between a temperature higher than the glass transition temperature by 10°C to a temperature lower than the melting point by 5°C, wherein the temperature of annealing is preferable 120°C to 250°C,

### BRIEF DESCRIPTION OF THE DRAWING

The figure is a graph showing the temperature dependency of the dielectric constant and dielectric loss tangent of the film obtained in Example 10.

### DESCRIPTION OF PREFERRED EMBODIMENTS

The material for producing the stretched moldings of the present invention is a styrene-based resin having mainly syndiotactic configuration and a weight average molecular weight of at least 50 000. The syndiotactic configuration means a stereostructure in which phenyl groups or substituted phenyl groups as side chains are located alternately in opposite directions relative to the main chain composed of carbon-carbon bonds. The tacticity is quantitatively determined by the nuclear magnetic resonance method using a carbon isotope (¹³C-NMR method). The tacticity as determined by the ¹³C-NMR method is indicated in terms of proportions of structural units continuously connected to each other, i.e., a diad in which two structural units are connected to each other, a triad in which three structural units are connected to each other, and a pentad in which five structural units are connected to each other. The styrene-based resin having mainly the syndiotactic configuration of the present invention includes polystyrene, poly(alkylstyrene), poly(halogenated styrene), poly(alkoxystyrene), polyvinyl benzoate and mixtures thereof, and copolymers containing the above polymer units as the main component and each having syndiotacticity such that the proportion of a diad is at least 75% and preferably at least 85%, or the proportion of a pentad (racemi pentad) is at least 30% and preferably at least 50%.

In the case of styrene-based resins with low syndiotacticity, satisfactory stretching effect can not be expected even if they are subjected to the stretching treatment.

The above poly(alkylstyrene) includes polymethylstyrene, polyethylstyrene, polyisopropylstyrene, poly(tert-butylstyrene) and the like. The poly(halogenated styrene) includes polychlorostyrene, polybromostyrene, and polyfluorostyrene. The poly(alkoxystyrene) includes polymethoxystyrene, polyethoxystyrene and the like. Of these styrene-based resins, polystyrene, poly(p-methylstyrene), poly(m-methylstyrene), poly(p-tert-butylstyrene), poly(p-chlorostyrene), poly(m-chlorostyrene), poly(p-fluorostyrene), and a copolymer of styrene and p-methylstyrene are most preferable.

The styrene-based resin to be used in the present invention needs to have a weight average molecular weight of at least 50,000, preferably at least 100,000, most preferably at least 300,000. The molecular weight distribution is not critical. If the weight average molecular weight is less than 50,000, difficulties such as breakage in stretching operation hinders a sufficient stretching, or a stretched molding having high mechanical strength and heat resistance cannot be obtained.

The styrene-based resin having mainly syndiotactic configuration can be obtained, for example, by polymerizing a styrene-based monomer (corresponding to the desired styrene-based resin) by the use of a catalyst comprising a titanium compound and a condensate of water and trialkylaluminum in the presence or absence of an inert hydrocarbon solvent (JP-A-187708/1987).

In the present invention, the aforementioned styrene-based resin having mainly syndiotactic configuration is used as the material for the stretched molding, In addition, materials as prepared by adding other polymers (e.g., styrene-based resins having atactic configuration, styrene-based resin having isotactic configuration, low molecular weight styrene-based resins having syndiotactic configuration, and polymers other than the styrene-based resins), inorganic powders such as metal powder, talc and mica, inorganic fibers such as glass fiber, an antistatic agent, a lubricant, an anti-clouding agent, a heat stabilizer, a dye, and a pigment to the above styrene-based resin having mainly syndiotactic configuration can be used. The amount of the other polymer, inorganic powder, inorganic fiber or additive to be used is 0.0005 to 10 parts by weight and preferably 0.001 to 5 parts by weight and most preferably 0.01 to 3 parts by weight per 100 parts by weight of the styrene-based resin having mainly syndiotactic configuration.

In the present invention, the styrene-based resin having mainly syndiotactic configuration or material obtained by compounding other components thereto is used as a raw material and is molded by extrusion molding, calender molding, blow molding or injection molding and so forth to produce a sheet (film or preliminary molding) and tube for stretching. In this case, the raw material is melted by heating and molded in the desired form by the use of various molding machines. The melting temperature of the raw material is usually preferably a temperature which is not lower than the melting point and not higher than the decomposition point of the styrene-based polymer used or compounds thereof. For instance, when the styrene-based polymer is polystyrene, the melting temperature is 260 to 350°C and preferably 280 to 330°C. If the temperature is too high, undesirable problems occur, such as decomposition of the raw material. Thickness of the sheet is not critical and is usually chosen from the range of not more than 5 mm, preferably 3 mm to 20 µm. If the thickness is in excess of 5 mm, the sheet sometimes becomes difficult to stretch by internal crystallization. The crystallinity of the sheet (film) is not more than 25%, preferably not more than 15% and most preferably not more than 10%.

According to the invention a sheet having the lowest crystallinity as possible, particularly a sheet having a large thickness, is produced in a way that the raw material which has been heat melted be quenched at the time of molding. The temperature of the coolant in this quenching is desirably adjusted to a temperature which is lower than the glass transistion temperature of the styrene-based polymer or compounds thereof by 10°C or more, preferably 20°C or more and further preferably 30°C or more. For instance, when the styrene-based polymer is polystyrene, the temperature is not higher than 80°C, preferably not higher than 70°C, and most preferably not higher than 60°C. The quenching rate is from 200 to 3°C/s, preferably from 200 to 5°C/s and most preferably from 200 to 10°C/s. If the temperature of the coolant is too high and quenching rate is too low, cooling becomes slow and the material becomes turbid as a result of partial crystallization.

The thickness of the sheet for stretching as obtained above is not critical. It is preferred, however, that the unevenness in thickness be minimized. More specifically, it should be controlled to be not more than 15% and particularly preferably not more than 5%. Surface irregularities are preferably controlled to be not more than 1 µm (measured according to JIS B0601).

The sheet is generally stretched uniaxially or biaxially while heating at a temperature in the range of from the glass transition temperature of the raw material to a temperature which is by 10°C lower than the melting point thereof. A temperature in the range of the glass transition temperature to the cold crystallization temperature of it is preferred. Therein stretching rate is preferably 100%/min. to 500,000%/min. In the case of uniaxial stretching, the sheet should be stretched at a draw ratio of at least 2, preferably 3 to 10. In the case of biaxial stretching, the sheet should be stretched at a draw ratio of at least 1.2, preferably at least 1.5, more preferably 2.5 to 8.5, most preferably 3 to 5 in each direction. If the draw ratio is too small, physical properties of sheet, film or tape of the stretched molding are not satisfactorily improved. In the case of biaxial stretching, the sheet may be stretched simultaneously in the machine direction (MD) and transverse direction (TD), or may be stretched succesively in the desired order.

In the present invention, particularly in the case of biaxial stretching, the raw material can be subjected to inflation molding or stretching blow molding directly without formation of a sheet or preliminary molding to produce a biaxially stretched molding (e.g., a biaxially stretched film). In this inflation molding or stretching blow molding, it is effective so as to prevent melt fracture, roughness of surface and the like that the resin be maintained at a temperature which is at least by 20°C higher than its melting point. If, however, the melt temperature is too high, the decomposition of the resin proceeds in molding. Therefore, the melt temperature is preferably lower than the decomposition point. When the styrene-based polymer is polystyrene, for instance the melt temperature is usually adjusted to the range of from 270 to 330°C, preferably 280°C to 300°C. In the inflation molding, where stretching is effected immediately after molten extrusion, the stretching temperature is preferably by 5 to 150°C lower and more preferably by 10 to 100°C lower than the melting point. In the case of stretching blow molding, the preform before stretching may be either a hot parison or a cold parison. In inflation molding or stretching blow molding, if the blow-up ratio is decreased, uniaxial stretching is realized.

Uniaxial stretching or biaxial stretching according to the present invention provides a stretched molding having excellent heat resistance, solvent resistance, chemical resistance, mechanical properties and electric insulating properties. It is also effective that the stretched molding is further annealed (heated) at a temperature in the range of a temperature which is higher than the glass transition temperature by 10°C or more to a temperature which is lower than the melting point by 5°C or more, for example, at a temperature of from 120 to 250°C. Improvement in heat resistance and so forth cannot be expected if the annealing temperature is lower than a temperature which is higher than the glass transition temperature by 10°C. On the other hand, problems such as melting of a part or the whole if it is in excess of a temperature which is lower than the melting point by 5°C. The annealing time is usually 1 second to 100 hours, preferably 5 seconds to 100 hours and most preferably 20 seconds to 10 hours. The annealing is usually carried out in the air atmosphere or in an atmosphere of inert gas such as argon and nitrogen. It is more effective during the annealing the stretched molding in a state of tension. This annealing further increases heat resistance, dimensional stability and so forth of the stretched molding.

When the styrene-based resin is heat-melted, quenched, stretched and molded into a wrapping material or container according to the present invention, a transparent stretched molding can be obtained, the contents of which can be seen and maintains heat resistance and solvent resistance of the raw material; because the styrene-based resin used as the raw material has high syndiotacticity and transparency such that the haze is not more than 30%.

Moreover, a stretched molding can be obtained which is excellent in electric properties such as electric insulating properties (e.g., a breakdwon voltage (BDV) at 25°C of at least 30 kV/mm) and dielectric properties.

Accordingly, the molding of the present invention can be used as a food wrapping material (e.g., sheet, film or bottle), a housing material for electric or electronic parts, a wrapping material, and further as an electric insulator, e.g., condenser, cable and transverter and other industrial films.

The present invention is described in greater detail with reference to the following examples.

### REFERENCE EXAMPLE 1

### (1) (Preparation of Methylaluminoxane)

200 ml of toluene was placed in a reactor, and 47.4 ml (492 millimoles) of trimethylaluminum and 35.5 g (142 millimoles) of copper sulfate pentahydrate were added thereto and reacted with each other at 20°C for 24 hours.

Then the solid portion was removed from the reaction mixture to obtain a toluene solution containing 12.4 g of methylaluminoxane.

### (2) (Production of Polystyrene having Syndiotactic Configuration)

2 L (L=liter) of toluene as a solvent, and 5 mmol of tetraethoxytitanium and 500 mmol (as aluminum atom) of methylaluminoxane obtained in above described (1) as catalyst components were placed in a reactor, and then 15 L of styrene was added at 50°C and polymerized for 4 hours.

After polymerization, the reaction product was washed with a mixture of hydrochloric acid and methanol to decompose and remove the catalyst components, and then dried to obtain 2.5 kg of a styrene-based resin (polystyrene). The polymer was subjected to Soxhlet extraction using methyl ethyl ketone as a solvent to obtain 95% by weight of an extraction residue. The weight average molecular weight of the residue was 800,000. A ¹³C-NMR analysis (solvent: 1,2-dichlorobenzene) showed a peak at 145.35 ppm, ascribable to the syndiotactic structure, and the syndiotacticity in terms of the racemi pentad as calculated from the peak area was 96%. The melt viscosity of the styrene polymer as determined with a capillary rheometer using Autograph 1125 (manufactured by Instrom Co., Ltd.) was 7x10⁴ poises under conditions of temperature 300°C and rate of shear 10/sec.

### (3) (Production of Polystyrene having Syndiotatic Configuration)

2 L of toluene as a solvent, and 5 mmol of tetraethoxytitanium and 300 mmol (as aluminum atom) of methylaluminoxane obtained in above described (1) as catalyst components were placed in a reactor, and then 15 L of styrene was added at 55°C and polymerized for 4 hours.

After polymerization, the reaction product was washed with a mixture of hydrochloric acid and methanol to decompose and remove the catalyst components, and then dried to obtain 2.5 kg of a styrene-based resin (polystyrene). The polymer was subjected to Soxhlet extraction using methyl ethyl ketone as a solvent to obtain 97% by weight of the extraction residue. The weight average molecular weight of the residue was 400,000. A ¹³C-NMR analysis showed a peak at 145.35 ppm, ascribable to the syndiotactic structure, and the syndiotacticity in terms of the racemi pentad as calculated from the peak area was 98%.

The melt viscosity of the styrene polymer as determined under the same conditions as above (2) was 2x10³ Pa·s (2x10⁴ poises).

### (4)(Production of Polystyrene having Syndiotactic Configuration)

2 L of toluene as a solvent, and 1 mmol of cyclopentadienyltitanium trichloride and 500 mmol (as aluminum atom) of methylaluminoxane obtained in abovedescribed (1) as catalyst components were placed in a reactor, and then 3.6 L of styrene was added at 20°C and polymerized for 1 hour.

After polymerization, the reaction product was washed with a mixture of hydrochloric acid and methanol to decompose and remove the catalyst components, and then dried to obtain 330 g of a styrene-based resin(polystyrene). The polymer was subjected to Soxhlet extraction using methyl ethyl ketone as a solvent to obtain 95% by weight of an extraction residue. The weight average molecular weight of the residue was 290,000, the number average molecular weight thereof was 158,000 and the melting point was 270°C. A ¹³C-NMR analysis showed a peak at syndiotacticity in terms of the racemi pentad as calculated from the peak area was 96%. The melt viscosity of the styrene polymer as determined under the same conditions as above (2) was 4x10² Pa·s (4x10³ poises).

### (5)(production of Polystyrene having Syndiotactic Configuration)

50 ml of toluene as a solvent, and 0.075 mmol of tetraethoxytitanium and 7.5 mmol (as aluminum atom) of methylaluminoxane obtained in abovedescribed (1) as catalyst components were placed in a reactor, and then 225 ml of styrene was added at 40°C and subsequently hydrogen was introduced therein until the hydrogen pressure reached 0,5 MPa (5 kg/cm²). Polymerization was performed for 1.5 hours.

After polymerization, the reaction product was washed with a mixture of hydrochloric acid and methanol to decompose and remove the catalyst components, and then dried to obtain 15.0 g of a styrene-based resin(polystyrene). The polymer was subjected to Soxhlet extraction using methyl ethyl ketone as a solvent to obtain 95% by weight of an extraction residue. The weight average molecular weight of the residue was 16,000 and the number average molecular weight thereof was 3,000. A ¹³C-NMR analysis showed a peak at 145.35 ppm, ascribable to the syndiotactic structure, and the syndiotacticity in terms of the racemi pentad as calculated from the peak area was 98%.

### EXAMPLE 1

To the polystyrene obtained in Reference Example 1(2) were added 0.7 part by weight of bis(2,4-di-tert-butylphenyl) pentaerythritol diphosphite and 0.1 part by weight of tetraquis(methylene(3,5-di-tert-butyl-4-hydroxyhydrocinnamate))methane as antioxidants, and the resulting mixture was extruded and pelletized by the use of a twin-screw extruder having a diameter of 40 mm.

The pellets thus obtained were introduced in a single-screw extruder having a diameter of 40 mm and equipped with a T die at the tip thereof, and extruded under conditions of cylinder temperature 290°C, T die temperature 300°C, through put 4.2 kg/h. while quenching to 30°C at average quenching rate of 50°C/s. to produce a sheet having a thickness of 600 µm.

The sheet for stretching as obtained above was transparent and had a density of 1.04 g/cm³, a glass transition temperature of 90°C and a crystallinity of 2%. The sheet was subjected to simultaneous biaxial stretching (draw ratio: 2x2) at 125°C to obtain a stretched film. This stretched film was subjected to annealing in a state of tension at 160°C for 20 seconds. The physical properties of the film are shown in Table 1.

The sheet was uniaxially stretched in MD at a draw ratio of 4.5 at a stretching temperature of 120°C to obtain a stretched film. The physical properties of the film are shown in Table 1.

### EXAMPLE 2

The film obtained in Example 1 was subjected to heat treatment in a state of tension at 210°C for 20 seconds. The physical properties of the film thus treated are shown in Table 1.

### EXAMPLE 3

The sheet for stretching as obtained in Example 1 was subjected to simultaneous biaxial stretching (draw ratio: 2x2) at 125°C to obtain a stretched film. The physical properties of the film are shown in Table 1.

### EXAMPLE 4

The film as obtained in Example 3 was subjected to annealing in a state of tension at 160°C for 20 seconds. The physical properties of the film are shown in Table 1.

### EXAMPLE 5

The sheet for stretching as obtained in Example 1 was subjected to simultaneous biaxial stretching (draw ratio: 4x4) at 120°C to obtain a stretched film. The physical properties of the film arc shown in Table 1.

### EXAMPLE 6

The sheet for stretching as obtained in Example 1 was first stretched to a draw ratio of 3.5 times in MD and then to a draw ratio of 3 times in TD to obtain a stretched film. The physical properties of the film are shown in Table 1.

### EXAMPLE 7

A styrene-based polymer (polystyrene), having a weight average molecular weight of 1,500,000 and a syndiotacticity in a racemi pentad of 96%, was produced in the same manner as in Reference Example 1 except that the polymerization temperature was changed from 50°C to 35°C. 2 parts by weight of talc powder as a lubricant was added to the polystyrene, and the resulting mixture was molded into a sheet at 280°C by the use of a calender roll. The surface temperature of the roll for cooling the sheet was 10°C.

The sheet was then subjected to simultaneous biaxial stretching (draw ratio: 2.5 x 2.5) at 120°C to obtain a stretched film. The physical properties of the film are shown in Table 1.

### EXAMPLE 8

To a mixture of 90 parts by weight of the polystyrene obtained in Reference Example 1 and 10 parts by weight of atactic polystyrene (trade name: NF20; weight average molecular weight: 300,000; produced by Idemitsu Petrochemical Co., Ltd.) were added 0.1 part by weight of bis(2,4-di-tert-butylphenyl)pentaerythritol diphosphite and 0.1 part by weight of tetraquis(methylene(3,5-di-tert-butyl-4-hydroxyhydrocinnamate)) methane, and the resulting mixture was extruded and pelletized by the use of a twin-screw extruder having a diameter of 40 mm.

The pellets thus obtained were introduced into a single screw extruder having a diameter of 40 mm and equipped with a T die at the tip thereof, and extruded under conditions of cylinder temperature 290°C, T die temperature 300°C and through put 4.2 kg/h. while quenching to 20°C at average quenching rate of 50°C/s to obtain a sheet having a thickness of 600 µm.

The sheet thus obtained had a density of 1.04 g/cm³, a glass transition temperature of 100°C and a crystallinity of 2%.

The sheet was subjected to simultaneous biaxial stretching (draw ratio: 3.5 x 3.5) at 125°C to obtain a stretched film. The physical properties of the film are shown in Table 1.

### EXAMPLE 9

The pellets obtained in Example 1 were molded by the use of an injection molding machine to produce a preliminary molding (outer diameter: 28 mm; total length: 150 mm; thickness: 2.0 mm; weight: 35 g). This preliminary molding (crystallinity: 5%) was subjected to biaxial stretching blow molding by heating it at 130°C for 50 seconds with an infrared ray heater and blowing nitrogen gas at a pressure of 2,5 MPa (25 kg/cm²) in a stretching blow molding machine to obtain a hollow container having a volume of 1 L. The physical properties of the container are shown in Table 1.

### EXAMPLE 10

An original film was produced in the same manner as in Example 4, using the styrene polymer obtained in Reference Example 1 (3). The average quenching rate was 40°C/s. and the cooling temperature was 30°C. The original film thus obtained (thickness: 0.4 mm; crystallinity: 4%) was subjected to simultaneous biaxial stretching in both MD and TD each to 4 times the original length (draw ratio: 4 x 4), and then annealed at 260°C for 15 seconds. The results are shown in Table 1.

### EXAMPLE 11

An original film was produced in the same manner as in Example 4, using the styrene polymer obtained in Reference Example 1 (4). The quenching rate was 30°C/sec. and the cooling temperature was 30°C. The original film thus obtained (thickness: 0.5 mm; crystallinity: 4%) was subjected to simultaneous biaxial stretching in both MD and TD each to 4.5 times the original length (draw ratio: 4.5 x 4.5), and then annealed at 250°C for 10 seconds The results are shown in Table 1.

### COMPARATIVE EXAMPLE 1

The physical properties of the sheet (not-stretched sheet) as obtained in Example 1 are shown in Table 1.

### COMPARATIVE EXAMPLE 2

An original sheet for stretching as obtained in Example 1 was subjected to annealing in a state of tension at 150°C for 600 seconds. The physical properties of the sheet are shown in Table 1.

### COMPARATIVE EXAMPLE 3

To the styrene polymer obtained in Reference Example 1 (5) was added the same antioxidant as used in Example 1, and the resulting mixture was press molded to obtain an amorphous original film. On heating the amorphous original film to 120°C, the film was deformed by the weight thereof and could not be stretched.

### EXAMPLE 12

The sheet of 0.1 mm thickness obtained in the same manner as in Example 1 was subjected to simultaneous biaxial stretching (draw ratio: 2.0 x 2.0) at 125°C to obtain a stretched film having a thickness of 50 µm. This film was further subjected to annealing at 210°C.

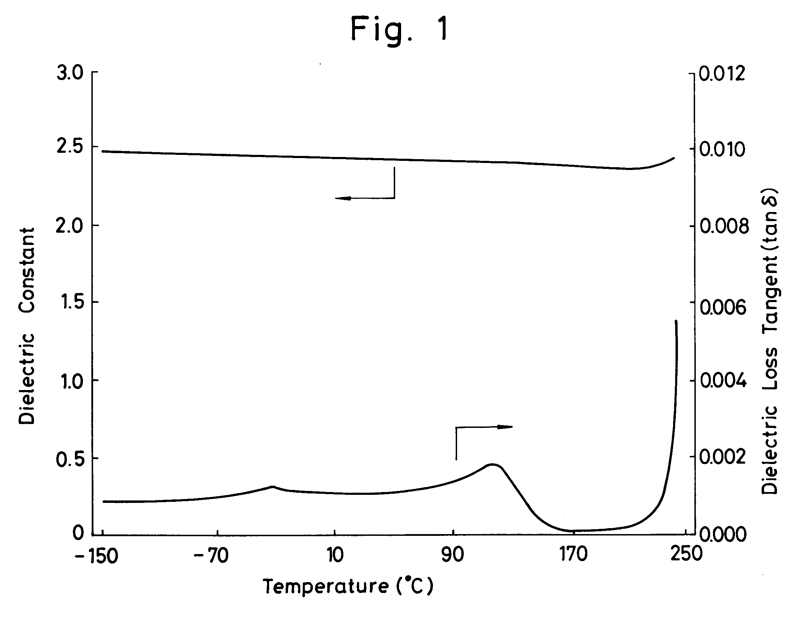

The physical properties of the sheet are shown in Table 2. The sheet was measured for changes with temperature of dielectric constant and dielectric loss tangent by the use of an apparatus for measuring a dielectric constant (produced by Toyo Seiki Co., Ltd.) at a frequency of 976 Hz. The results are shown in Fig. 1

It can be seen from Fig. 1 that the temperature dependency of dielectric constant and dielectric loss is small.

### EXAMPLES 13 TO 16

stretched films of 25 µm thickness were produced in the same manner as in Example 12 except that the thickness of original sheet, the stretching temperature, draw ratio, annealing temperature and annealing time were changed as shown in Table 2.

The physical properties of the films are shown in Table 2.

### COMPARATIVE EXAMPLE 4

A stretched film was produced in the same manner as in Example 10 except that atactic polystyrene (NF 20) was used in place of the polystyrene obtained in Reference Example 1, and the stretching temperature and the draw ratio were changed to 120°C and 3.0 x 3.0, respectively.

The stretched film melted upon application of heat treatment at 170°C.

### COMPARATIVE EXAMPLE 5

The pellets obtained in Example 1 were heat pressed and then quenched to obtain a sheet (crystallinity: 6%) having a thickness of 3 mm. This sheet was subjected to annealing at 170°C for 600 seconds. The results are shown in Table 2.

### REFERENCE EXAMPLE 2

### (Production of Styrene Copolymer having Mainly Syndiotactic Configuration)

6 L of toluene as a solvent, and 5 mmol of tetraethoxytitanium and 500 mmol (as aluminum atom) of methylaluminoxane as catalyst components were placed in a reactor, and then 48.75 mol of styrene and 1.25 mol of p-methylstyrene were added thereto at 50°C and polymerized for 2 hours.

After of polymerization, the reaction product was washed with a mixture of hydrochloric acid and methanol to decompose and remove the catalyst components, and then dried to obtain 640 g of a copolymer. This copolymer was subjected to Soxhlet extraction using methyl ethyl ketone as a solvent to obtain 80% by weight of an extraction residue. The copolymer, the residue, had a weight average molecular weight of 440,000, a number average molecular weight of 240,000 and a melting point of 255°C. The p-methylstyrene unit content of the copolymer was 5 mol%.
A ¹³C-NMR analysis of the copolymer showed peaks at 145.11 ppm, 145.22 ppm and 142.09 ppm.

### EXAMPLE 17

A stretched film was produced in the same manner as in Example 12 except that the styrene copolymer obtained in Reference Example 2 was used and the draw ratio was changed to 3.5 x 3.5.

The physical properties of the film are shown in Table 2.

### EXAMPLE 18

To a mixture of 95 parts by weight of the polystyrene obtained in Reference Example 1 and 5 parts by weight of glass fiber having an average fiber length of 3 mm (produced by Asahi Fiber Glass Co., Ltd.; fiber diameter: 10-15 µm; in the chopped strand form) were added 0.1 part by weight of bis(2,4-di-tert-butylphenyl)pentaerythritol diphosphite and 0.1 part by weight of tetraquis(methylene(3,5-di-tert-butyl-4-hydroxyhydrocinnamate))methane as antioxidants, and the resulting mixture was extruded and pelletized by the use of a twin-screw extruder having diameter of 40 mm.

The pellets thus obtained were introduced into a single screw extruder having a diameter of 40 mm and equipped with a T die at the tip thereof, and extruded under conditions of cylinder temperature 290°C, T die temperature 300°C and through put 4.2 kg/h. while quenching to 30°C at average quenching rate of 75°C/s to obtain a sheet having a thickness of 200 µm.

The sheet was subjected to simultaneous biaxial stretching (draw ratio: 2 x 2) at 125°C to obtain a stretched film. The physical properties of the film are shown in Table 2.

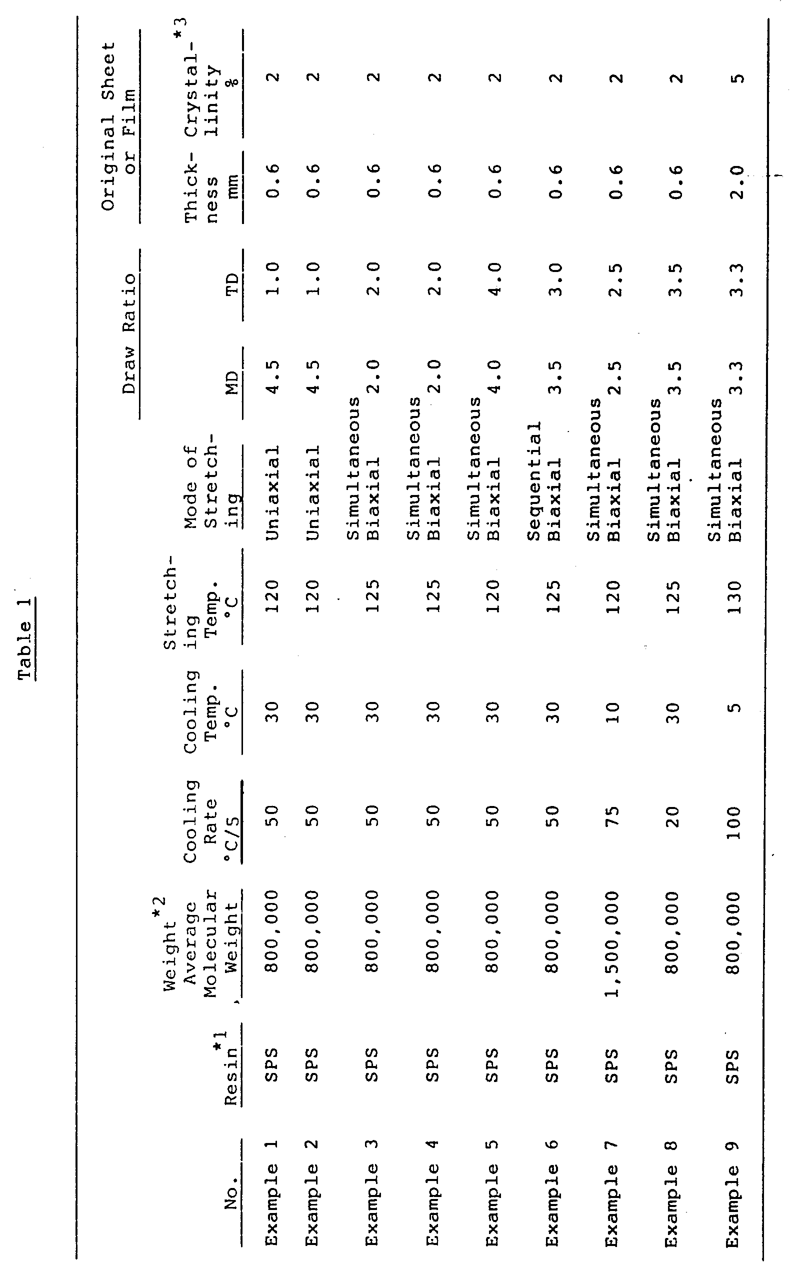

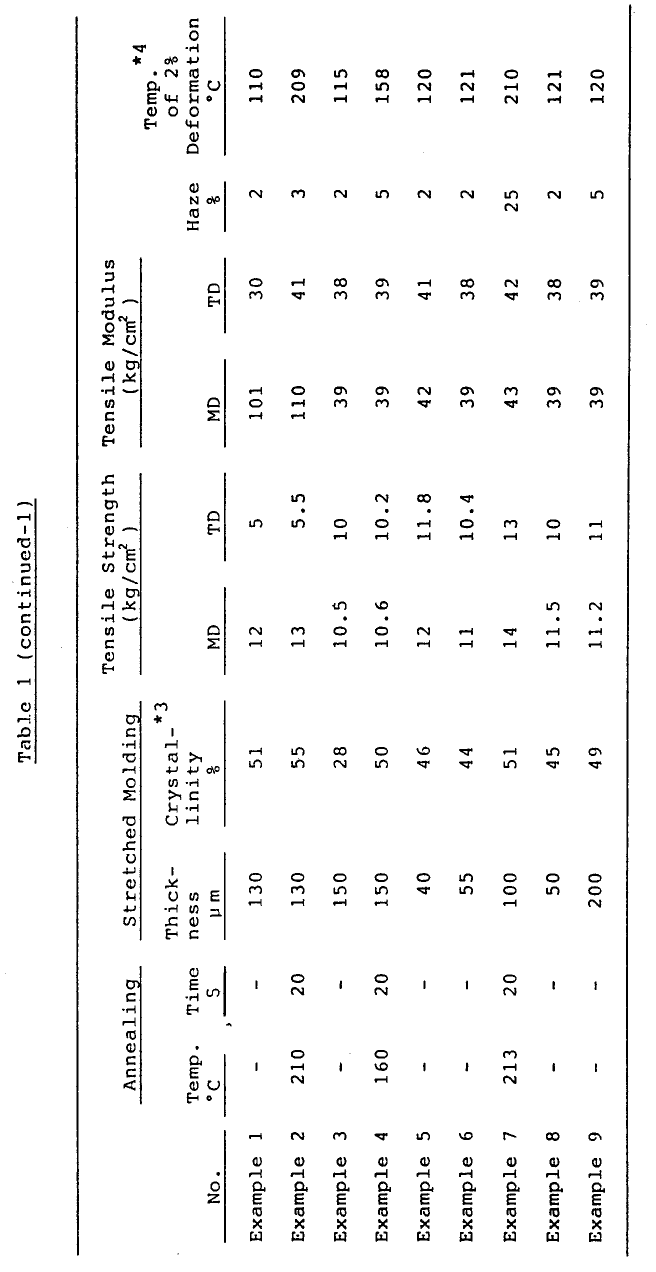

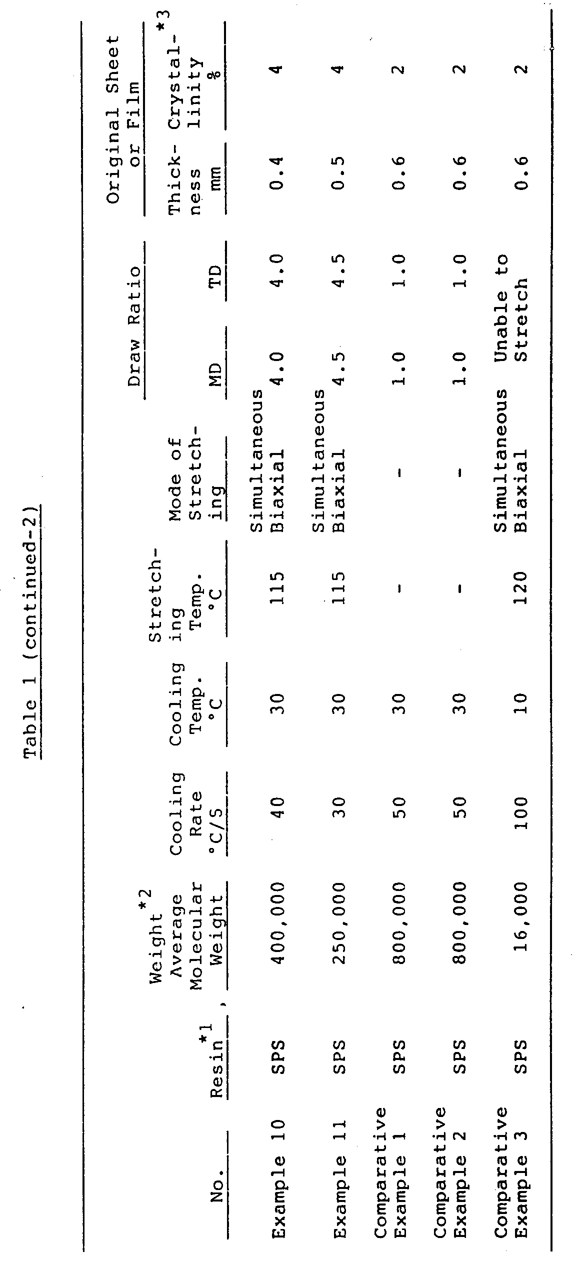

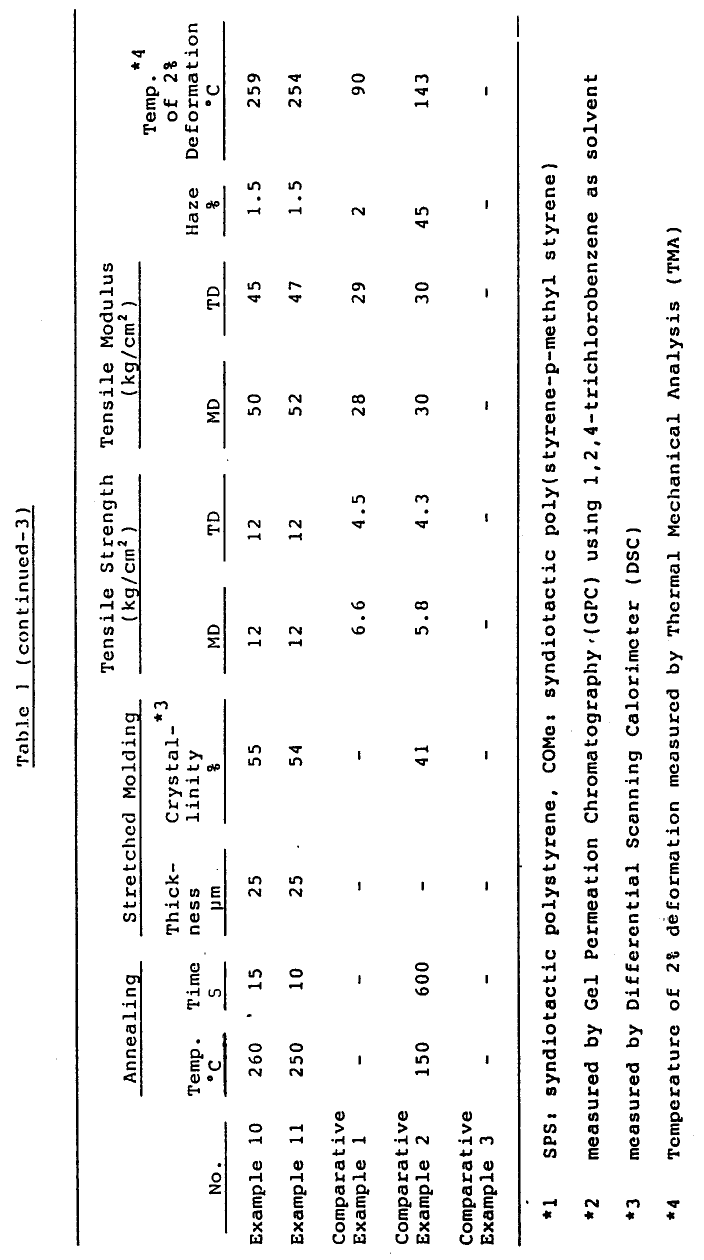

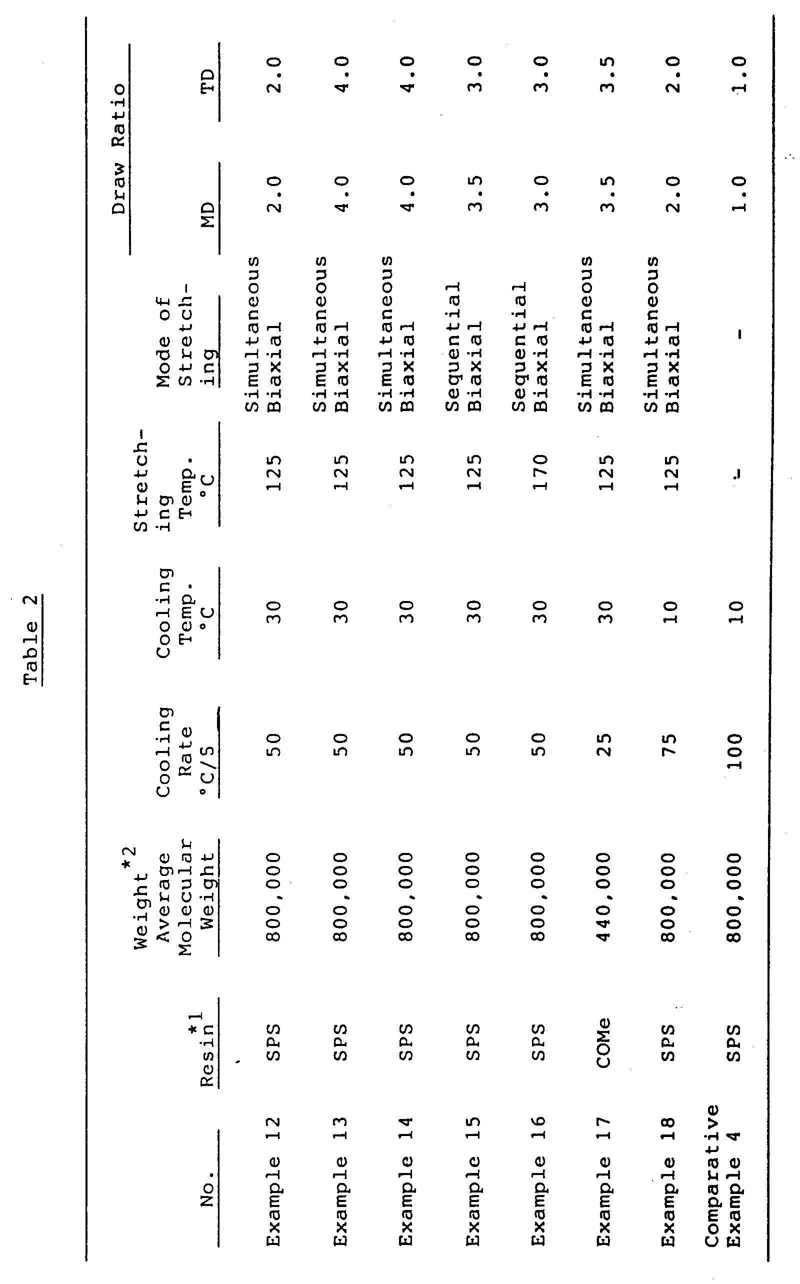

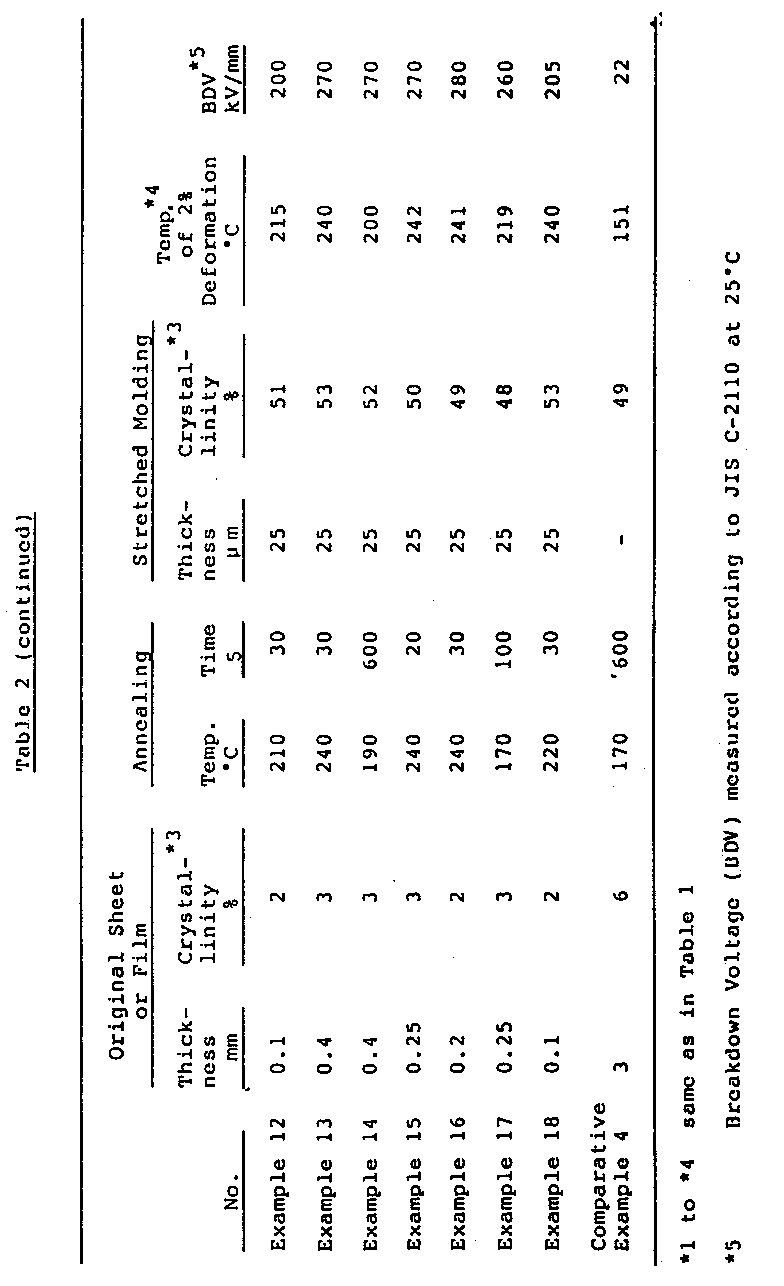

## Claims (Claims for the following Contracting State(s): DE, GB, FR, IT, NL, SE, LI, CH, BE)

1. A stretched styrene-based resin molding having such transparency that the haze is not more than 30% as obtained from a styrene-based polymer having mainly syndiotactic configuration and a weight average molecular weight of at least 50,000,
excepted a styrene-based polymer having a weight-average molecular weight of 800,000, a syndiotacticity of 96% of the racemic pentad and compounded with each 0.1 % by weight of bis(2,4-di-tert-butylphenyl)pentaerithritol diphosphite and tetrakis[methylene(3,5-di-tert-butyl-4-hydroxy cinnamate)] methane,
by subjecting said styrene-based polymer to heat melting, quenching the molten resin prior to stretching, wherein the quenching rate is from 200 to 3°C/s, and subsequently to uniaxial stretching of at least two times or to biaxial stretching of at least 1.2 times in each direction.

2. The molding as claimed in claim 1, having such electric insulating properties that the breakdown voltage at 25°C is at least 30 kV/mm.

3. A process for producing a stretched styrene-based resin molding having such transparency that the haze is not more than 30% from a styrene-based resin having mainly syndiotactic configuration and a weight average molecular weight of at least 50,000,
excepted a styrene-based resin having a weight average molecular weight of 800,000, a syndiotacticity of 96% of the racemic pentad and compounded with each 0.1% by weight of bis(2,4-di-tert-butylphenyl)pentaerithritol diphosphite and tetrakis[methylene(3,5-di-tert-butyl-4-hydroxy cinnamate)] methane,
which comprises subjecting said styrene-based resin to heat melting, quenching the molten resin prior to stretching, wherein the quenching rate is from 200 to 3°C/s, and subsequently to uniaxial stretching of at least two times or biaxial stretching of at least 1.2 times in each direction.

4. A stretched styrene-based resin molding as obtained by subjecting the stretched styrene-based resin molding of claims 1 to 2 to annealing at a temperature in the range between a temperature higher than the glass transition temperature by 10°C to a temperature lower than the melting point by 5°C.

## Claims (Claims for the following Contracting State(s): AT, ES)

1. A stretched styrene-based resin molding as obtained by subjecting a styrene-based polymer having mainly syndiotactic configuration and a weight average molecular weight of at least 50,000 to uniaxial stretching of at least two times or to biaxial stretching of at least 1.2 times in each direction.

2. The molding as claimed in Claim 1, having heat resistance and such transparency that the haze is not more than 30%.

3. The molding as claimed in Claim 1 or 2, having such electric insulating properties that the breakdown voltage at 25 °C is at least 30 kV/mm.

4. A process for producing a stretched styrene-based resin molding which comprises subjecting a styrene-based resin having mainly syndiotactic configuration and a weight average molecular weight of at least 50,000 to uniaxial stretching of at least two times or biaxial stretching or at least 1.2 times in each direction.

5. The process as claimed in claim 4 which comprises heat melting and quenching the molten resin prior to stretching.

6. The process as claimed in Claim 5, wherein the quenching rate is from 200 to 3°C/s.

7. A stretched styrene-based resin molding as obtained by subjecting the stretched styrene-based resin molding of Claims 1 to 3 to annealing at a temperature in a range between a temperature higher than the glass transition temperature by 10°C to a temperature lower than the melting point by 5°C.

8. The stretched styrene-based resin molding as claimed in Claim 7 wherein the temperature of annealing is from 120°C to 250°C.

## Patentansprüche (Patentansprüche für folgende(n) Vertragsstaat(en): DE, GB, FR, IT, NL, SE, LI, CH, BE)

1. Gerecktes Harzformteil auf der Basis von Styrol, das eine solche Transparenz besitzt, daß die Trübung nicht mehr als 30 % beträgt, erhalten aus einem Polymer auf Styrolbasis mit hauptsächlich syndiotaktischer Konfiguration und einer massegemittelten Molekülmasse von mindestens 50000,
mit Ausnahme eines Polymers auf der Basis von Styrol, das eine massegemittelte Molekülmasse von 800000, eine Syndictaktizität von 96 % racemischen Pentaden aufweist und mit jeweils 0,1 Gew.-% Bis(2,4-di-tert-butylphenyl)pentaerithritoldiphosphit und Tetrakis[methylen(3,5-di-tert-butyl-4-hydroxycinnamat)]methan vermischt ist,
durch Unterwerfen des genannten Polymers auf der Basis von Styrol, dem Schmelzen in der Wärme, dem Quenchen des geschmolzenen Harzes vor dem Recken, worin die Quenchgeschwindigkeit von 200 bis 3°C/s beträgt, und nachfolgend dem uniaxialen, mindestens zweifachen Recken oder dem biaxialen, mindestens 1,2-fachen Recken in jeder Richtung.

2. Formteil nach Anspruch 1, das solche elektrische Isolierungseigenschaften aufweist, daß die Durchschlagsspannung bei 25°C mindestens 30 kV/mm beträgt.

3. Verfahren zur Herstellung eines gereckten Formteils auf der Basis von Styrol, das eine solche Transparenz aufweist, daß die Trübung nicht mehr als 30 % beträgt, aus einem Harz auf der Basis von Styrol mit hauptsächlich syndiotaktischer Konfiguration und einer massegemittelten Molekülmasse von mindestens 50000,
mit Ausnahme eines Harzes auf der Basis von Styrol, das eine massegemittelte Molekülmasse von 800000 und eine Syndiotaktizität von 96 % racemischen Pentaden aufweist, und das mit jeweils 0,1 Gew.-% Bis(2,4-di-tert-butylphenyl)pentaerithritoldiphosphit und Tetrakis[methylen(3,5-di-tert-butyl-4-hydroxycinnamat)]methan vermischt ist, das umfaßt: Unterwerfen des genannten Harzes auf der Basis von Styrol, dem Schmelzen in der Wärme, Quenchen des geschmolzenen Harzes vor dem Recken, worin die Quench-Geschwindigkeit von 200 bis 3°C/s beträgt, und anschließend uniaxiales, mindestens zweifaches Recken oder biaxiales, mindestens 1,2-faches Recken in jeder Richtung.

4. Gerecktes Harzformteil auf der Basis von Styrol, das erhalten wird durch Unterwerfen des gereckten Harzformteils auf der Basis von Styrol nach den Ansprüchen 1 bis 2, dem Tempern bei einer Temperatur, die im Bereich liegt zwischen einer Temperatur die um 10°C höher liegt als die Glasübergangstemperatur bis zu einer Temperatur, die um 5°C niedriger als der Schmelzpunkt liegt.

## Patentansprüche (Patentansprüche für folgende(n) Vertragsstaat(en): AT, ES)

1. Gerecktes Harzformteil auf der Basis von Styrol, erhalten durch Unterwerfen eines Polymers auf der Basis von Styrol mit hauptsächlich syndiotaktischer Konfiguration und einer massegemittelten Molekülmasse von mindestens 50000, dem uniaxialen, mindestens zweifachen Recken oder dem biaxialen, mindestens 1,2-fachen Recken in jeder Richtung.

2. Formteil nach Anspruch 1, das wärmebeständig ist und eine solche Transparenz aufweist, daß die Trübung nicht mehr als 30 % beträgt.

3. Formteil nach den Ansprüchen 1 oder 2, das solche elektrische Isolierungseigenschaften aufweist, daß die Durchschlagsspannung bei 25°C mindestens 30 kV/mm beträgt.

4. Verfahren zur Herstellung eines gereckten Formteils auf der Basis von Styrol, das umfaßt: Unterwerfen eines Harzes auf der Basis von Styrol mit hauptsächlich syndiotaktischer Konfiguration und einer massegemittelten Molekülmasse von mindestens 50000, dem uniaxialen, mindestens zweifachen Recken oder dem biaxialen, mindestens 1,2-fachen Recken in jeder Richtung.

5. Verfahren nach Anspruch 4, daß das Schmelzen in der Wärme und das Quenchen des geschmolzenen Harzes vor dem Recken umfaßt.

6. Verfahren nach Anspruch 5, worin die Geschwindigkeit des Quenchens von 200 bis 3°C/s beträgt.

7. Gerecktes Harzformteil auf der Basis von Styrol, das erhalten wird durch Unterwerfen des gereckten Harzformteils auf der Basis von Styrol nach den Ansprüchen 1 bis 3, dem Tempern bei einer Temperatur, die im Bereich liegt, zwischen einer Temperatur, die um 10°C höher liegt als die Glasübergangstemperatur, und einer Temperatur, die um 5°C niedriger als der Schmelzpunkt liegt.

8. Gerecktes Harzformteil nach Anspruch 7, worin die Temperatur des Temperns zwischen 120°C und 250°C liegt.

## Revendications (Revendications pour l'(les) Etat(s) contractant(s) suivant(s): DE, GB, FR, IT, NL, SE, LI, CH, BE)

1. Moulage de résine à base de styrène étiré ayant une transparence telle que le trouble ne dépasse pas 30% obtenu à partir d'un polymère à base de styrène ayant une configuration principalement syndiotactique et un poids moléculaire moyen en poids d'au moins 50 000,
sauf un polymère à base de styrène ayant un poids moléculaire moyen en poids de 800 000, une syndiotacticité de 96% de la pentade racémique et combinée avec à chaque fois 0,1% en poids de diphosphite de biS(2,4-di-tert-butylphényl)pentaérythritol et de tétrakis[méthylène(3,5-di-tert-butyl-4-hydroxy-cinnamate) ]méthane,
par soumission dudit polymère à base de styrène à une fusion à la chaleur, extinction de la résine fondue avant l'étirement, la vitesse d'étirement étant de 200 à 3°C/s, puis à un étirement uniaxial d'au moins deux fois ou à un étirement biaxial d'au moins 1,2 fois dans chaque direction.

2. Moulage tel que revendiqué dans la revendication 1, ayant des propriétés d'isolation électrique telles que la tension de rupture à 25°C est d'au moins 30 kV/mm.

3. Procédé de préparation d'un moulage de résine à base de styrène étiré ayant une transparence telle que la trouble ne dépasse pas 30% à partir d'une résine à base de styrène ayant une configuration principalement syndiotactique et un poids moléculaire moyen en poids de 50 000,
sauf une résine à base de styrène ayant un poids moléculaire moyen en poids de 800 000, une syndiotacticité de 96% de la pentade racémique et combinée avec à chaque fois 0,1% en poids de diphosphite de biS(2,4-di-tert-butylphényl)pentaérythritol et de tétrakis [méthylène(3,5-di-tert-butyl-4-hydroxy cinnamate)]méthane,
dans lequel on soumet ladite résine à base de styrène à une fusion à la chaleur, on éteint la résine fondue avant de l'étirer, la vitesse d'extinction étant de 200 à 3°C/s, puis on la soumet à un étirement uniaxial d'au moins deux fois ou à un étirement biaxial d'au moins 1,2 fois dans chaque direction.

4. Moulage de résine à base de styrène étirée tel qu'obtenu en soumettant le moulage de résine à base de styrène étirée des revendications 1 à 2 à un recuit à une température comprise entre une température supérieure de 10°C à la température de transition vitreuse et une température inférieure de 5°C au point de fusion.

## Revendications (Revendications pour l'(les) Etat(s) contractant(s) suivant(s): AT, ES)

1. Moulage de résine à base de styrène étire en soumettant un polymère à base de styrène ayant une configuration principalement syndiotactique et un poids moléculaire moyen en poids d'au moins 50 000 à un étirement uniaxial d'au moins deux fois ou un à étirement biaxial d'au moins 1,2 fois dans chaque direction.

2. Moulage tel que revendiqué dans la revendication 1, ayant une résistance thermique et une transparence telles que le trouble ne dépasse pas 30%.

3. Moulage tel que revendiqué dans la revendication 1 ou 2, ayant des propriétés d'isolation électrique telles que la tension de rupture à 25°C est d'au moins 30 kV/mm.

4. Procédé de préparation d'un moulage de résine à base de styrène étiré dans lequel on soumet une résine à base de styrène ayant une configuration principalement syndiotactique et un poids moléculaire moyen en poids d'au moins 50 000 à un étirement uniaxial d'au moins 2 fois ou à un étirement biaxial d'au moins 1,2 fois dans chaque direction.

5. Procédé tel que revendiqué dans la revendication 4, dans lequel on fait fondre la chaleur et on éteint la résine fondue avant l'étirement.

6. Procédé tel que revendiqué dans la revendication 5, dans lequel la vitesse d'étirement est de 200 à 3°C/s.

7. Moulage de résine à base de styrène étiré tel qu'obtenu en soumettant le moulage de résine à base de styrène étirée des revendications 1 à 3, à un recuit à une température comprise entre une température dépassant de 10°C la température de transition vitreuse et une température inférieure de 5°C au point de fusion.

8. Moulage de résine à base de styrène étiré tel que revendiqué dans la revendication 7, dans lequel la température de recuit est comprise entre 120°C et 250°C.
